Europäisches Patentamt

European Patent Office

Office européen des brevets

(11) Veröffentlichungsnummer: **0 046 252**
**B1**

(12) **EUROPÄISCHE PATENTSCHRIFT**

(45) Veröffentlichungstag der Patentschrift: **12.11.86**

(51) Int. Cl.⁴: **C 25 B 13/04,** C 25 B 1/10

(21) Anmeldenummer: **81106215.7**

(22) Anmeldetag: **08.08.81**

(54) Poröses Oxiddiaphragma für alkalische Elektrolysen, dessen Herstellung und Verwendung.

(30) Priorität: **16.08.80 DE 3031064**

(43) Veröffentlichungstag der Anmeldung:
**24.02.82 Patentblatt 82/08**

(45) Bekanntmachung des Hinweises auf die
Patenterteilung:
**12.11.86 Patentblatt 86/46**

(84) Benannte Vertragsstaaten:
**BE FR GB IT NL**

(56) Entgegenhaltungen:
**EP-A-0 022 252**
**DE-A-2 927 566**
**DE-A-2 941 889**
**DE-C- 396 994**

(73) Patentinhaber: **Kernforschungsanlage Jülich**
**Gesellschaft mit beschränkter Haftung**
**Postfach 1913**
**D-5170 Jülich 1 (DE)**

(72) Erfinder: **Divisek, Jiri, Dr.**
**Gutenbergstrasse 34**
**D-5170 Jülich (DE)**
Erfinder: **Schmitz, Heinrich**
**Kopernikusstrasse 14**
**D-5170 Jülich (DE)**
Erfinder: **Hesse, Renke**
**Bocholtzer Strasse 40**
**D-5170 Jülich (DE)**

Courier Press, Leamington Spa, England.

**Beschreibung**

Die Erfindung bezieht sich auf ein poröses Oxid-Diaphragma für die alkalische Elektrolyse, insbesondere Wasserelektrolyse, mit porösem oxidischen Material auf einem durchlässigen, gerüstgebenden Träger, sowie auf ein Verfahren zur Herstellung desselben, bei dem eine ausgehend von Metallpulver aus Nickel, Eisen oder Kupfer auf einem durchlässigen, gerüstgebenden Metallträger gebildete poröse Metallschicht bei erhöhter Temperatur aufoxidiert wird, sowie auf dessen Verwendung.

Die alkalische Wasserelektrolyse erfolgt im allgemeinen wegen der relativ geringen chemischen Beständigkeit des üblicherweise angewandten Diaphragmamaterials, Asbest, in heißer KOH bei Temperaturen unter 100°C. Solche relativ niedrigen Temperaturen sind sowohl thermodynamisch, als auch elektrodenkinetisch von Nachteil. Aus diesem Grunde wurden in jüngster Zeit Zahlreiche Versuche unternommen, Asbest als Diaphragmamaterial zu ersetzen.

So wurde bereits ein Diaphragma aus polytetrafluoräthylen(Teflon®) - gebundenem Kaliumhexatitanatfilz ($K_2Ti_6O_{13}$) entwickelt, das bis 150°C beständig ist. Dieses Diaphragma ist jedoch nicht sonderlich preiswert, da teure Materialien verwendet werden, und der dadurch bedingte Spannungsabfall ist mit dem von Asbest-Diaphragmen vergleichbar (siehe auch: M. S. Casper, "Hydrogen Manufacture by Electrolysis, Thermal Decomposition and Unusual Techniques", Noyes data corp., Park Ridge, 1978, S. 190).

Ein anderes Diaphragma wird in der DE—OS 29 41 889 beschrieben, das aus einer porösen Matrix aus Fasern von Fluorkohlenstoffpolymeren besteht, in der eine Zirkonium- und eine Magnesiumverbindung abgelagert und beide Verbindungen dann durch hydrolyse, insbesondere mit Ammoniak, in Oxide ungewandelt werden, Man erhält so eine hydrophile Matrix mit vorhersagbarer Porosität und Stromeffizienz.

Im Int. J. Hydrogen Energy 5, (1980), S. 165—171 wird ein anderer Separator für alkalische Wasserelektrolysen beschrieben, der aus polytetrafluoräthylen - gebundener Polyantimonsäure besteht, die als Ionenaustauscher wirkt. Diese Membran ist in KOH ebenfalls bis 150°C beständig. Wesentliche Nachteile diese Separators sind neben einem hohen Preis der elektrische Membranwiderstand von 0,7 bis 0,9 $\Omega$ cm$^2$ bei Zimmertemperatur bzw. 0,25 bis 0,4 $\Omega$ cm$^2$ bei 80 bis 90°C.

Es wurden daher weitere Diaphragmen mit geringerem elektrischen Widerstand entwickelt, wie z.B. ein aus gesinterter Oxidkeramik hergestelltes Diaphragma (J. Fischer, H. Hofmann, G. Luft, H. Wendt: Seminar "Hydrogen as Energy Vector", Commission Europ. Comm. 3—4 Oct. 1978, Brüssels, S. 277—290). Dieses Diaphragma zeichnet sich zwar durch sehr gute Widerstandswerte aus (0,027—0,27 $\Omega$ cm$^2$ bei 25°C), die Herstellung ist jedoch nicht einfach und umfaßt

  (i) die Erzeugung des geeigneten Oxidmaterials, wie $ZrO_2$, $BaTiO_3$, $K_2Ti_6O_{13}$, usw. und

  (ii) ein Zusammensintern der Pulver bei hohen Temperaturen zwischen 1300—1700°C.

Ferner wurden poröse metallische Diaphragmen aus gesintertem Nickel vorgeschlagen (P. Perroud, G. Terrier: "Hydrogen Energy System", Proc. 2nd World Hydrogen Energy Conf., Zürich 1978, S. 241). Diese haben einen sehr geringen Widerstand. Sie find mechanisch stabil und preisgünstig. Der große Nachteil besteht allerdings darin, daß diese Diaphragmen ebenso wie die Elektroden elektronenleitend sind und bei kompakter Bauweise eine zu große Kurzschlußgefahr besteht.

Um diese störende Elektronenleitfähigkeit zu vermeiden, wurde von der Anmelderin in einer älteren europäischen Patentanmeldung EP—Al—0 022 252 (nach Art. 54(3)(4) EPÜ ein Diaphragma vorgeschlagen, das durch Oxidation eines mit gerüstgebendem Metallträger versehenen porösen Metallsinterkörpers auf der basis von Ni, Fe oder Cu bei erhöhter Temperatur erhalten wird. Überraschender weise bleibt die poröse Struktur und ein ausreichender Zusammenhalt des Materials bei einer solchen Oxidation erhalten, die das Kompaktmaterial nur oberflächlich angreift, so daß der Metallträger seine gerüstgebende Funktion behält. Diese Methode liefert Diaphragmen mit ausgezeichneter Korrosionsbeständigkeit in heißer KOH bis 150°C und sehr guten Diaphragma-Widerstandswerten zwischen 0,06 und 0.08 $\Omega$ cm$^2$ bei 20°C.

Es wurde nun überraschenderweise festgestellt, daß ein durch thermische Aufoxidation eines mit Träger versehenen porösen Metallsinterkörpers, wie oben angegeben, erhältliches Diaphragma auf einfachere Weise mit verbesserter Struktur erzielt werden kann, wenn statt der Sinterschicht lediglich eine ungesinterte Pulverschicht verwendent wird.

Das erfindungsgemäße Diaphragma der eingangs genannten Art ist daher gekennzeichnet durch eine poröse oxidische Schicht aus aufoxidiertem Nickel, Eisen oder Kupfer, die durch Kaltverdichtung von Metallpulver zu einer Metallpulverschicht auf einem durchlässigen Metallträger und Oxidation bei erhöhter Temperatur gebildet worden ist.

Die erfindungsgemäße Herstellung desselben ist somit dadurch gekennzeichnet, daß eine lediglich durch Kaltverdichtung von Metallpulver gebildete Metallpulverschicht aufoxidiert wird.

Auf diese Art und Weise wird eine thermische Behandlung, nämlich die Sinterverdichtung, eingespart und bei der Oxidation der Metallpulverschicht eine bessere gleichmäßige Durchdringung der noch nicht zusammengebackenen Pulverkörner erreicht, die ein vollständig oxidiertes Produkt ergeben kann, was insbesondere bei relativ dünnschichtigen Diaphragmen von Vorteil sein kann.

Die aufzuoxidierende metallpulverschicht wird durch Kaltverdichtung des Metallpulvers erhalten, was in herkömmlicher Weise durch Vibrationsverdichtung, Aufsprühen von Pulver bzw. Pulversuspension oder Saugverfahren geschehen kann, vorzugsweise wird das Pulver jedoch unter Drucken zwischen 1 MPa und $2 \cdot 10^3$ MPa und vorzugsweise 10 bis 100 MPa kalt gepreßt. Als Metalle dienen insbesondere Eisen, Nickel und Kupfer, die in marktgängigen Korngrößen angewandt werden können. Die Korngröße des Materials bestimmt die schließlich erhaltene Porosität, wobei üblicherweise Poren unter 10 µm angestrebt werden, die eine gute Trennung von Anoden- und Kathodenraum gewährleisten. Größere Poren ergeben einen geringeren Widerstand aber eine schlechtere Trennung. Mit mittleren Korngrößen von 2 bis 3 µm wurden außerordentlich befriedigende Ergebnisse erhalten. Zu feine Korngrößen verringern die Diaphragmawirkung, sa daß Materialien unter 0,5 µm nicht bevorzugt werden.

Für die Porosität des schließlich erhaltenen Diaphragmas ist im Falle einer Preßverdichtung des Pulvers der Verdichtungsdruck neben der Korngröße und Korngrößenverteilung maßgebend, der so gewählt wird, daß Preßkörper mit einer maximalen Porengröße um etwa 100 µm erhalten werden. Bei Arbeiten mit mittleren Korngrößen von 2 bis 3 µm und Carbonylnickelpulver unter Preßdrucken von etwa 10 bis 100 MPa wurden angemessene Verdichtungen erhalten. Drucke unter 1 MPa dürften üblicherweise nicht ausreichen für die gewünschte Preßverdichtung, während Drucke über $2 \cdot 10^3$ MPa einen apparativen Aufwand erfordern würden, der unangemessen ist.

Unabhängig von der Art der Verdichtung bzw. Formung (durch Vibration, Aufpinseln bzw. Aufsprühen von Pulver, Saugverfahren oder Preßverdichtung) soll durch diesen Schritt ein Vorkörper erzielt werden, der nach der Oxidation einen ausreichenden Zusammenhalt durch gegenseitige Durchwachsung der Oxidschichten sich berührender Körner aufweist.

Als Träger dient ein durchlässiger gerüstgebender Träger, der vorzugsweise aus dem gleichen Metall besteht wie die darauf zu verdichteten Pulverkörper und insbesondere eine Netz- oder Siebträger mit einer Maschenweite von maximum einigen 100 µm und zwar vorzugsweise ein Träger aus Drahtnetz mit Maschenweiten (~200 µm), die ein "Durchsacken" der davon umgrenzten Pulverschichten verhindern. Netzträger mit Maschenweiten bis 0,25 mm und 0,35 mm Drahtstärke wurden experimentell mit Erfolg verwendet.

Die Oxidation erfolgt zweckmäßigerweise in Luft bei Temperaturen um etwa 1000°C, da bei diesen Temperaturen in tragbaren Zeiten von einigen 10 Minuten eins ausreichende Oxidation der Pulverschichten erreicht werden kann. Temperaturen über 1000°C wirken lediglich verteuernd und werden daher nicht bevorzugt. Unter 1000°C ist eine Oxidation unter entsprechendem Zeitaufwand selbstverständlich möglich.

Besonders zweckmäßig sind relativ dünne Diaphragmen von minimal etwa 10 µm Dicke, die vollständig aufoxidiert sind und ohne Kurzschlußgefahr mehrer 1000 Stunden sicher betrieben werden können. Zur Zeit werden Membrandicken um etwa 150 µm bevorzugt, die besonders unanfällig, gut durchoxidiert und gasundurchlässig sind, Die Oxidation sollte so weit getrieben werden, daß die aufoxidierte Schicht als nicht elektronenleitendes Diaphragma einsetzbar ist. Zweckmäßigerweise wird man die Oxidation daher bis zu Widerstandswerten von zumindsst einigen 100 $\Omega/cm^2$ betreiben und vorzugsweise bis etwa 1 k$\Omega/cm^2$ (im trockenen Zustand gemessen).

Die erfindungsgemäßen Diaphragmen eignen sich besonders gut für Elektrolysezellen mit daran in Sandwichbauweise fixierten porösen Elektroden, die vorzugsweise durch galvanische Abscheidung von Nickel/Zink und Herauslösen von Zink erzeugt werden.

Nachfolgend wird die Erfindung anhand von Beispielen erläutert:

Bei den Beispielen wird Bezug genommen auf die angefügten Zeichnungen; es zeigen:

Figur 1 schematische Querschnitte von Diaphragmen und

Figur 2 Strom/Spannungskurven für unterschiedliche Arten von Diaphragmen.

Beispiel 1

In eine Preßform wurde in Aceton aufgeschlämmtes INCO-Nickelpulver Typ 255 mit einer mittleren Teilchengröße von 2,3 bis 3,0 µm und einer maximalen Korngröße von 10 bis 15 µm einer Schüttdichte von 0,50 bis 0,65 g/cm³ und einer spezifischen Oberfläche von 0,68 m²/g für eine Schichtdicke von 60 mgNi/cm² eingegossen. Die Oberfläche der so erhaltenen Nickelschicht wurde durch Rütteln geglätter und das Aceton mit Fließpapier aufgesaugt. Nach Enfernen der Acetonreste wurde ein Nickelnetz mit einer Maschenweite von 0,15 mm und einer Drahtstärke von 0,20 mm aufgelegt und das Ganze mit einem Preßdruck von 20 MPa gepreßt.

Dieser so mechanisch stabilisierte Vorkörper wurde aus der Form entfernt und in Luft bei 1000°C 30 min. lang oxidiert und so ein für den Einbau in eine Elektrolyse zelle geeigneter Diaphragmakörper erhalten. Die NiO-Schichtdicke betrug 0,15 mm und der spezifische elektrishe Oberflächenwiderstand in 7 M KOH bei Zimmertemperatur 0,13 $\Omega$ cm². Diese Werte sind mit den von vorgesinterten NiO-Diaphragmen durchaus vergleichbar, ebenfalls die geringe Korrionsabtragung in heißer KOH und ausgezeichnete Trennwirkung für den beiden Produktgase Wasserstoff und Sauerstoff.

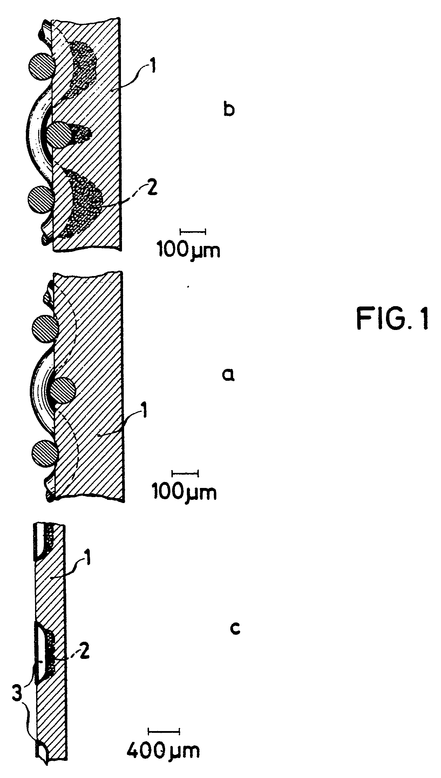

Figur 1a zeigt schematisch die nach dem erfindungsgemäßen Verfahren erhaltene völlig metallfreie reine NiO-Schicht 1. Ein vorgesintertes Diaphragma (Figur 1b) enthält dagegen nach der gleichen Oxidation noch restliche Metallfelder 2, die u.U. zu elektrischen Kurzschlüssen führen können. Um eine ähnliche reine NiO-Struktur wie gemäß Figur 1a zu erhalten, braucht ein Sinter-Vorkörper entweder wesentlich längere Oxidationszeiten oder eine höhere Oxidationstemperatur von etwa 1200°C.

Beispiel 2

Beispiel 1 wurde unter gleichen Bedingungen wiederholt, jedoch wurde als Stützgerüst ein VECO-Nickelblechsieb mit einer Blechstärke von 0,2 mm (60% freie Fläche) verwendet. Wie Figur 1c zeigt, entsteht an Stellen, die zu Siebflächen 3 des Trägers benachbart sind, Nickeloxid 1 mit noch restlichen Metallfeldern 2. Die Stellen dagegen, die offenbar durch den Preßvorgang nicht so stark komprimiert wurden und für Sauerstoff frei zugänglich waren, sind metallfrei.

Beispiel 3

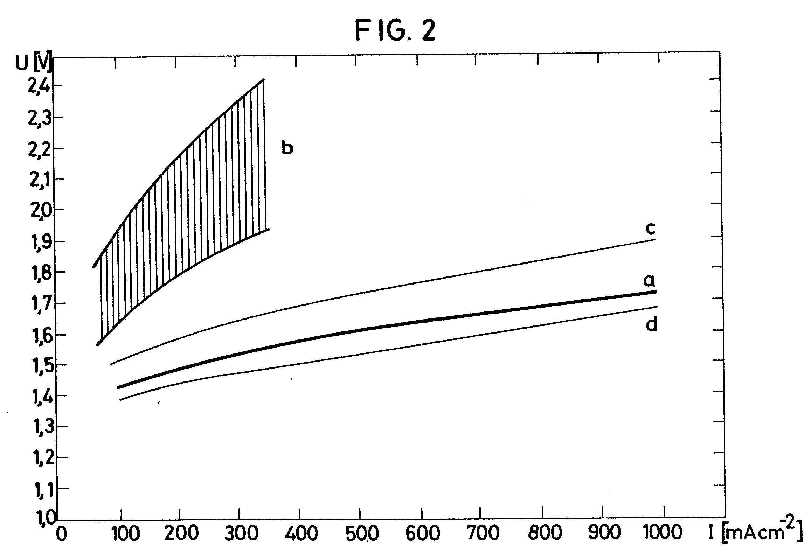

Ein wie in Beispiel 1 hergestelltes Diaphragma wurde auf beiden Seiten in der von Anmelderin in der EP—AI—0 022 252 beschriebenen Weise galvanisch mit Ni/Zn-Legierung in Elektrodenform versehen. Nach dem Aktivieren wurde eine kompakte Einheit für die Wasserelektrolyse erhalten, die bei 100°C in 40%-iger KOH getestet wurde und die in Figur 2 gezeigte Strom-Spannungskurve a in reproduzierbarer Weise lieferte. Zum Vergleich ist in Figur 2 der Bereich b für die konventionelle Wasserelektrolyse eingetragen. Die Kurve c entspricht einer fortgeschrittenen alkalischen Wasserelektrolyse bei 120°C mit aktivierten Elektroden (Kathode: $NiCo_2S_4$, Anode: $NiCo_2O_4$, vgl.: H. Vandenborre et al., Status Seminar, "Hydrogen as Energy Vector", Comm. Europ. Comm., 13—14. Feb. 1980, Brüssels, S. 143). Die Kurve d spiegelt die neuesten Ergebnisse der Fa. General Electric mit der sogenannten SPE-Elektrolyse wider (J. H. Russel: Hydrogen Energy Progress, Proc. 3rd World Hydrog. Energy Conf., 23—26. Juni 1980, Tokyo, S. 3—13). Diese Kurve wurde bei 115°C erhalten.

Wie man sieht, wird die erfindungsgemäße Arbeitsweise lediglich von der sog. SPE-Elektrolyse etwas übertroffen, die jedoch wesentliche aufwendigere Diaphragma- und Elektrodenmaterialien erfordert als die erfindungsgemäße alkalische Wasserelektrolyse. Aus diesem Vergleich mit dem neuesten Stand der Technik gehen die Vorteile des erfindungsgemäß hergestellten Diaphragmas besonders deutlich hervor.

**Patentansprüche für die Vertragsstaaten: FR, GB, IT**

1. Verfahren zur Herstellung eines porösen Oxiddiaphragmas für alkalische Elektrolyse, insbesondere Wasserelektrolyse, bei dem eine ausgehend von Metallpulver aus nickel Eisen oder Kupfer auf einem durchlässigen gerüstgebenden Metallträger gebildete poröse Metallschicht bei erhöhter Temperatur aufoxidiert wird, dadurch gekennzeichnet, daß eine lediglich durch Kaltverdichtung von Metallpulver gebildete Metallpulverschicht aufoxidiert wird.

2. Verfahren nach Anspruch 1, dadurch gekennzeichnet, daß die zu oxidierende Metallpulverschicht durch Kaltpressen unter Drucken von 1 MPa bis $2 \cdot 10^3$ MPa, insbesondere von 10 bis 100 MPa gebildet wird.

3. Verfahren nach Anspruch 1 oder 2, dadurch gekennzeichnet, daß die Metallpulverschicht aus Pulver mit einer mittleren Korngröße von 0,5 bis 10 µm gebildet wird.

4. Verfahren nach einem der vorangehenden Ansprüche, dadurch gekennzeichnet, daß die Metallpulverschicht auf einem Netz oder Siebträger mit einer Maschenweite von maximal einigen hundert µm gebildet wird.

5. Verfahren nach einem der vorangehenden Ansprüche, dadurch gekennzeichnet, daß die Metallpulverschicht praktisch vollständig aufoxidiert wird.

6. Verfahren nach einem der vorangehenden Ansprüche, dadurch gekennzeichnet, daß die Metallpulverschicht auf einem Metallträger aus dem gleichen Metall wie das Pulver gebildet wird.

7. Verfahren nach einem der vorangehenden Ansprüche, dadurch gekennzeichnet, daß man in einem flüchtigen Medium aufgeschlämmtes Metallpulver auf einen durchlässigen, gerüstgebenden Träger aufträgt, das flüchtige Medium abtrennt und das Metallpulver unter Druckanwendung soweit verdichtet, daß bei der nachfolgenden Oxidation ein für den Gebrauchszweck ausreichender mechanischer Zusammenhalt der Schicht durch gegenseitige Durchwachsung der Oxidschichten sich berührender Körner erreicht wird, und daß man schließlich den so gebildeten Vorkörper bei erhöhter Temperatur um etwa 1000°C in sauerstoffhaltigem Gas aufoxidiert.

8. Diaphragma, erhältlich nach einem der vorangehenden Ansprüche, gekennzeichnet durch eine Dicke der aufoxidierten porösen Schicht von etwa 10 bis 500 µm, insbesondere etwa 100 bis 150 µm.

9. Verwendung des Diaphragmas nach Anspruch 8 für Elektrolysezellen, insbesondere mit daran sandwichartig fixierten porösen Elektroden, vorzugsweise mit galvanisch durch Abscheidung von Nickel/Zink und Herauslösen von Zink erzeugten aktiven Nickelelektroden.

**Patentansprüche für die Vertragsstaaten: BE, NL**

1. Poröses Oxid-Diaphragma für die alkalische Elektrolyse, insbesondere Wasserelektrolyse, mit porösem oxidischen Material auf einem durchlässigen gerüstgebenden Träger, gekennzeichnet durch eine poröse oxidische Schicht aus aufoxidiertem Nickel, Eisen oder Kupfer, die durch Kaltverdichtung von Metallpulver zu einer Metallpulverschicht auf einem durchlässigen Metallträger und Oxidation bei erhöhter Temperatur gebildet worden ist.

2. Diaphragma nach Anspruch 1, dadurch gekennzeichnet, daß die Metallpulverschicht durch Kaltpressen unter Drucken von 1 MPa bis 2 · 10³PMPa insbesondere von 10 bis 100 MPa erhalten worden ist.

3. Diaphragma nach Anspruch 1 oder 2, dadurch gekennzeichnet, daß die Metallpulverschicht aus Pulver einer mittleren Korngröße von 0,5 bis 10 µm erhalten worden ist.

4. Diaphragma nach einem der vorangehenden Ansprüche, dadurch gekennzeichnet, daß die Metallpulverschicht auf einem Netz- oder Siebträger mit einer Maschenweite von maximal einigen hundert µm gebildet ist.

5. Diaphragma nach einem der vorangehenden Ansprüche, dadurch gekennzeichnet, daß die Metallpulverschicht praktisch vollständig aufoxidiert ist.

6. Diaphragma nach einem der vorangehenden Ansprüche, gekennzeichnet durch eine Dicke der aufoxidierten Schicht von etwa 10 bis 500 µm, insbesondere etwa 100 bis 150 µm.

7. Diaphragma nach einem der vorangehenden Ansprüche, dadurch gekennzeichnet, daß die durch Oxidation gebildete oxidische Schicht durch Oxidation der Metallpulverschicht auf einem gerüstgebenden Träger aus dem gleichen Metall wie das Pulver erhalten worden ist.

8. Verfahren zur Herstellung eines Diaphragmas nach einem der vorangehenden Ansprüche, dadurch gekennzeichnet, daß man in einem flüchtigen Medium aufgeschlämmtes Metallpulver auf einen durchlässigen gerüstgebenden Träger aufträgt, das flüchtige Medium abtrennt und das Metallpulver unter Druckanwendung soweit verdichtet, daß bei der nachfolgenden Oxidation ein für den Gebrauchszweck ausreichender mechanischer Zusammenhalt der Schicht durch gegenseitige Durchwachsung der Oxidschichten sich berührender Körner erreicht wird, und daß man schließlich den so gebildeten Vorkörper bei erhöhter Temperatur um etwa 1000°C in sauerstoffhaltigem Gas aufoxidiert.

9. Verwendung des Diaphragmas nach einem der Ansprüche 1 bis 8 für Elektrolysezellen, insbesondere mit daran sandwichartig fixierten porösen Elektroden, vorzugsweise mit galvanisch durch Abscheidung von Nickel/Zink und Herauslösen von Zink erzeugten aktiven Nickelelektroden.

**Revendications pour les Etats Contractants: FR, GB, IT**

1. Procédé de fabrication d'un diaphragme poreux à base d'oxyde pour l'électrolyse alcaline, notamment pour l'électrolyse de l'eau, qui consiste à oxyder à température élevée une couche métallique poreuse formée à partir de poudre métallique constituée de nickel, de fer ou de cuivre, sur un support métallique perméable formant squelette, caractérisé en ce qu'il consiste à oxyder une couche de poudre métallique formée seulement par densification à froid de poudre métallique.

2. Procédé suivant la revendication 1, caractérisé en ce qu'il consiste à former la couche de poudre métallique à oxyder par densification à froid, sous une pression de 1 MPa à 2.10³ MPa, notamment de 10 à 100 MPa.

3. Procédé suivant la revendication 1 ou 2, caractérisé en ce qu'il consiste à former la couche de poudre métallique à partir d'une poudre ayant une granulométrie moyenne de 0,5 à 10 microns.

4. Procédé suivant l'une des revendications précédentes, caractérisé en ce qu'il consiste à former la couche de poudre métallique sur un support en forme de grille ou de tamis ayant une ouverture de maille de quelques cent es de micron au maximum.

5. Procédé suivant l'une des revendications précédentes, caractérisé en ce qu'il consiste à oxyder pratiquement complètement la couche de poudre métallique.

6. Procédé suivant l'une des revendications précédentes, caractérisé en ce qu'il consiste à former la couche de poudre métallique sur un support métallique en le même métal que la poudre.

7. Procédé suivant l'une des revendications précédentes, caractérisé en ce qu'il consiste à déposer de la poudre métallique mise en suspension dans un milieu volatil sur un support permeable formant squelette, à séparer le milieu volatil et à densifier la poudre métallique par application d'une pression jusqu'à obtention, lors de l'oxydation venant ensuite, par interpénétration mutuelle des couches d'oxyde des grains qui se touchent, d'un cohésion mécanique suffisante de la couche pour l'utilisation visée, et à oxyder finalement à haute température, à 1000°C environ, dans du gaz oxygène l'ébauché ainsi formée.

8. Diaphragme obtenu suivant l'une des revendications précédentes, caractérisé par une épaisseur de la couche poreuse oxydée de 10 à 500 microns environ et, notamment, de 100 à 150 microns environ.

9. Utilisation du diaphragme suivant la revendication 8, pour des cellules d'électrolyse ayant notamment des électrodes poreuses fixées en sandwich, de préférence des électrodes actives de nickel produites par électrolyse par dépôt de nickel/zinc et par dissolution du zinc.

**Revendications pour les Etats Contractants: BE, NL**

1. Diaphragme poreux à base d'oxyde pour l'électrolyse alcaline, notamment pour l'électrolyse de l'eau, comprenant una matière oxydée poreuse sur un support perméable formant squelette, caractérisé par une couche poreuse oxydée en nickel, fer ou cuivre oxydé, qui a été formée par densification à froid de poudre métallique en une couche de poudre métallique sur un support métallique perméable et par oxydation à température élevée.

2. Diaphragme suivant la revendication 1, caractérisé en ce que la couche de poudre métallique a été obtenue par densification à froid sous des pressions de 1 MPa à 2.10³ MPa, notamment de 10 à 100 MPa.

3. Diaphragme suivant la revendication 1 ou 2, caractérisé en ce que la couche de poudre métallique a été obtenu à partir d'une poudre ayant une granulométrie moyenne de 0,5 à 10 microns.

4. Diaphragme suivant l'une des revendications précédentes, caractérisé en ce que la couche de poudre métallique a été formée sur un support en forme de grille ou de tamis ayant une ouverture de maille de quelques centaines de micron au maximum.

5. Diaphragme suivant l'une des revendications précédentes, caractérisé en ce que la couche de poudre métallique est pratiquement complètement oxydée.

6. Diaphragme suivant l'une des revendications précédentes, caractérisé par une épaisseur de la couche oxydée de 10 à 500 microns environ, et notamment de 100 à 150 microns environ.

7. Diaphragme suivant l'une des revendications précédentes, caractérisé en ce que la couche oxydé formée par oxydation a été obtenue par oxydation de la couche de poudre métallique sur un support formant squelette en le même métal que la poudre.

8. Procédé de fabrication d'un diaphragme suivant l'une des revendications précédentes, caractérisé en ce qu'il consiste à déposer de la poudre métallique mise en suspension dans un milieu volatil sur un support perméable formant squelette, à séparer le milieu volatil et à densifier la poudre métallique en appliquant une pression jusqu'à obtention, lors de l'oxydation venant ensuite, par interpénétration mutuelle des couches d'oxyde des grains qui se touchent, d'une cohésion mécanique de la couche suffisante pour l'utilisation visée, et à oxygen finalement à haute temperature, à 1000°C environ, dans du gaz oxygéné l'ébauche ainsi formée.

9. Application du diaphragme suivant l'une des revendications 1 à 8, pour des cellules d'électrolyse ayant notamment des électrodes poreuses fixées en sandwich, de préférence des électrodes actives de nickel produites par électrolyse par dépôt de nickel/zinc et par dissolution du zinc.

**Claims for Contracting States: FR, GB, IT**

1. Process for manufacturing a porous oxide diaphragm for alkaline electrolysis, especially electrolysis of water, wherein a porous metal layer formed from metal powder of nickel, iron or copper on a pervious framework-providing metal support is oxidised-on at elevated temperature, characterised in that a metal powder layer formed only by cold compacting of metal powder is oxidised-on.

2. Process according to claim 1, characterised in that the metal powder layer to be oxidised is formed by cold pressing under pressures of 1 MPa to 2 · 10³ MPa, especially. 10 to 100 MPa.

3. Process according to claim 1 or 2, characterized in that the metal powder layer is formed of powder with a mean grain size of 0.5 to 10 µm.

4. Process according to one of the preceding claims, characterised in that the metal powder layer is formed on a grid or a screen support with a mesh width of at the most several hundred µm.

5. Process according to one of the preceding claims, characterised in that the metal powder layer is oxidised-on substantially completely.

6. Process according to one of the preceding claims, characterised in that the metal powder layer is formed on a metal support of the same metal as the powder.

7. Process according to one of the preceding claims, characterised in that metal powder put in suspension in a volatile medium is applied to a pervious framework-providing support, the volatile medium is separated-off, and the metal powder is compacted to such an extent under the application of pressure that in the subsequent oxidation a sufficient mechanical cohesion of the layer for the intended use is achieved by mutual interpenetration of the oxide layers of grains contacting each other, and that finally the preliminary body thus formed is oxidised-on at an elevated temperature of about 1000°C in oxygen-containing gas.

8. Diaphragm obtainable in accordance with one of the preceding claims, characterised by a thickness of the oxidised-on porous layer of about 10 to 500 µm, especially about 100 to 150 µm.

9. Use of the diaphragm according to claim 8 for electrolysis cells, especially with porous electrodes fixed thereon in sandwich fashion, preferably with active nickel electrodes produced galvanically by precipitation of nickel/zinc and dissolving-out of zinc.

**Claims for Contracting States: BE, NL**

1. Porous oxide diaphragm for alkaline electrolysis, especially electrolysis of water, with porous oxidic material on a pervious framework-providing support; characterised by a porous oxidic layer of oxidised-on nickel, iron or copper, which layer has been formed by cold compacting of metal powder to form a metal powder layer on a pervious metal support, and oxidation at elevated temperature.

2. Diaphragm according to claim 1, characterised in that the metal powder layer has been obtained by cold pressing under pressures of 1 MPa to 2 · 10³ MPa, especially 10 to 100 MPa.

3. Diaphragm according to claim 1 or 2, characterised in that the metal powder layer has been produced from powder of a mean grain size of 0.5 to 10 µm.

4. Diaphragm according to one of the preceding claims, characterised in that the metal powder layer is formed on a grid support or screen support with a mesh width of at the most several hundred μm.

5. Diaphragm according to one of the preceding claims, characterised in that the metal powder layer is oxidised-on substantially completely.

6. Diaphragm according to one of the preceding claims, characterised by a thickness of the oxidised-on layer of about 10 to 500 μm, especially about 100 to 150 μm.

7. Diaphragm according to one of the preceding claims, characterised in that the oxidic layer formed by oxidation has been obtained by oxidation of the metal powder layer on a framework-providing support made of the same metal as the powder.

8. Process for manufacturing a diaphragm according to one of the preceding claims, characterised in that metal powder put in suspension in a volatile medium is applied to a pervious framework-providing support, the volatile medium is separated off, and the metal powder is compacted to such an extent with the application of pressure that in the subsequent oxidation a sufficient mechanical cohesion of the layer for the intended use is achieved by mutual interpenetration of the oxide layers of grains contacting each other, and that finally the preliminary body thus formed is oxidised-on at elevated temperature of about 1000°C in oxygen-containing gas.

9. Use of the diaphragm according to one of claims 1 to 8 for electrolysis cells, especially with porous electrodes fixed thereon in sandwich fashion, preferably with active nickel electrodes produced galvanically by precipitation of nickel/zinc and dissolving-out of zinc.

0 046 252

FIG. 1

1

FIG. 2

0 046 252